(19) Europäisches Patentamt
European Patent Office
Office européen des brevets

(11) **EP 2 988 950 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(21) Anmeldenummer: **14723346.4**

(22) Anmeldetag: **17.04.2014**

(51) Int Cl.:
*B42D 15/00* (2006.01)          *G01N 21/27* (2006.01)
*G01N 21/64* (2006.01)          *G07D 7/12* (2016.01)

(86) Internationale Anmeldenummer:
**PCT/EP2014/057983**

(87) Internationale Veröffentlichungsnummer:
**WO 2014/173836 (30.10.2014 Gazette 2014/44)**

(54) **KALIBRIERVERFAHREN UND VERFAHREN ZUR SCHNELLEN BESTIMMUNG DER ABSOLUTEN LUMINESZENZINTENSITÄT**

CALIBRATION METHOD AND METHOD FOR RAPIDLY DETERMINING THE ABSOLUTE LUMINESCENCE INTENSITY

PROCÉDÉ D'ÉTALONNAGE ET PROCÉDÉ PERMETTANT DE DÉTERMINER RAPIDEMENT L'INTENSITÉ ABSOLUE DE LA LUMINESCENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2013 DE 102013207479**

(43) Veröffentlichungstag der Anmeldung:
**02.03.2016 Patentblatt 2016/09**

(73) Patentinhaber: **Bundesdruckerei GmbH**
**10969 Berlin (DE)**

(72) Erfinder: **KUNATH, Christian**
**12203 Berlin (DE)**

(74) Vertreter: **Patentanwälte Bressel und Partner mbB**
**Potsdamer Platz 10**
**10785 Berlin (DE)**

(56) Entgegenhaltungen:
**DE-A1- 19 958 048          US-A- 5 918 960**
**US-A1- 2002 195 571          US-A1- 2006 227 319**

• BRIL A ET AL: "Some methods of luminescence efficiency measurements", 19770101; 19751119 - 19751120, 1. Januar 1977 (1977-01-01), Seiten 13-19, XP008099930,

**Beschreibung**

Die Erfindung ein Verfahren zur Kalibrierung einer Photolumineszenzmessvorrichtung sowie ein Messsverfahren unter Verwendung derselben, welche eine schnelle Bestimmung einer absoluten Lumineszenzintensität von flächigen Proben ermöglichen.

Beispielsweise im Bereich der Herstellung von Wert- oder Sicherheitsdokumenten werden lumineszierende Substanzen verwendet und ein Lumineszenzverhalten als ein Sicherheitsmerkmal verwendet. Lumineszenz ist hierbei die auftretende optische Strahlung des Materials oder Substanz, die bei einem Übergang von einem energetisch aktivierten Zustand in einen energetisch niedriger liegenden Zustand ausgesandt wird. Je nach Art der Anregung wird die Lumineszenz weiter unterteilt. Findet die Anregung mittels Photonen statt, so spricht man von sogenannter Photolumineszenz. Diese wird je nach zeitlichem Verhalten zwischen der Photoanregung und der austretenden Lumineszenzstrahlung als Fluoreszenz oder Phophoreszenz bezeichnet. Die Unterscheidung hierzwischen ist fließend. Als Fluoreszenz wird in der Regel die Lumineszenzstrahlung bezeichnet, die nach Beenden der Photoanregung rasch abklingt. Phosphoreszierende Materialen senden hingegen die Lumineszenzstrahlung noch lange nach der Anregung, beispielsweise Minuten, Stunden oder sogar Tage später aus.

Im Bereich der Sicherheits- und/oder Wertdokumente sind insbesondere in die Fluoreszenz und schnelle Phosphoreszenz von entscheidender Bedeutung. Eine große Schwierigkeit ergibt sich jedoch daraus, dass physikalische Systeme, die eine Fluoreszenz oder allgemein eine Photolumineszenz zeigen, häufig Alterungsprozessen unterworfen sind, sodass keine geeigneten Fluoreszenznormale oder Photolumineszenznormale existieren, welche eine ausreichende Lumineszenzintesität zeigen und langzeitstabil sind. Insbesondere sind keine festen Referenzproben bekannt, die hierfür geeignet wären. Aus dem Stand der Technik sind zwar flüssige Systeme bekannt, die unmittelbar nach ihrer Zubereitung eine bekannte Lumineszenzintensität aufweisen. So können beispielsweise bestimmte Farbstofflösungen angesetzt werden, deren Lumineszenzintensität bei bekannter Anregung bekannt ist. Die hierbei verwendeten Farbstoffe werden jedoch im Prozess der Anregung und Abregung teilweise zerstört, sodass solche Lösungen keine Langzeitstabilität aufweisen. Darüber hinaus sind flüssige Proben in der Handhabung schwierig. Des Weiteren wird für die Vermessung von flüssigen Proben eine ganz andere Probengeometrie als für die Vermessung von festen Proben verwendet, sodass in einem Messaufbau die Vermessung sowohl einer festen als auch einer flüssigen Probe nicht möglich ist. Eine feste Probe wird zudem nur an der Oberfläche, eine flüssige Probe jedoch im Volumen angeregt.

Eine Messung einer Photolumineszenzintensität wird in der Regel ausgeführt, indem eine Einstrahlung von Licht im ultravioletten Wellenlängenbereich vorgenommen wird und die auftretende Lumineszenzintensität gemessen wird. In der Regel erfolgt die Messung spektral selektiv. Je größer die in dem luminiszierenden Stoff erzeugte Lumineszenzstrahlungsintensität bei konstanter Anregung ist, desto größer ist eine sogenannte Lumineszenz- oder Fluoreszenzeffizienz. Eine maximale Lumineszenzeffizienz ist erreicht, wenn jedes absorbierte Anregungsphoton in ein Lumineszenzphoton umgewandelt wird. Eine Sättigung der erzielbaren Lumineszenzintensität ist erreicht, wenn eine weitere Steigerung der Anregungsintensität zu keiner weiteren Steigerung der Lumineszenzintensität führt. Bei einem 2-NiveauSystem ist dieser Zustand erreicht, wenn die sich Hälfte der luminiszierenden Einheiten im angeregten Zustand befindet. Ein höherer Besetzungszustand des angeregten Niveaus kann bei einem 2-Niveausystem nicht erreicht werden, da der Wirkungsquerschnitt für die Photoabsorption gleich dem Wirkungsquerschnitt für die Photoemission ist.

Diese theoretisch maximale Lumineszenzeffizienz kann in der Praxis in der Regel nicht erreicht werden. Dennoch ist es insbesondere bei der Materialeingangsprüfung aber auch zu Verifikationszwecken häufig notwendig, eine Fluoreszenzeffizienz von Festkörperproben, beispielsweise von flächigen Druckmustern, oder auch von flächigen, im Volumen luminiszierenden Substratschichten oder Ähnlichem, zu ermitteln. Hierfür sind aus dem Stand der Technik keine geeigneten Messvorrichtungen und Messverfahren bekannt, die eine Bestimmung einer absoluten Lumineszenzeffizienz auf einfache Weise gestatten.

US 2006/227319 A1 beschreibt ein Verfahren und eine Vorrichtung zum Bestimmen eines Gesamtstrahldichtefaktors einer fluoreszierenden Probe bei einer vorgegebenen Beleuchtung ohne Verwendung eines Fluoreszenzstandards und einer UV-Licht-Korrektur. Hierbei werden zwei Lichtquellen unterschiedlicher spektraler Intensitäten eingesetzt.

US 2002/195571 A1 beschreibt einen Papierfluoreszenz-Messsensor. Um einen Zustand der Beleuchtung bei der Messung kontrollieren zu können, ist ein Messsensor vorgesehen, der Licht, welches an einer Innenseite eines Beleuchtungsfensters reflektiert wird, misst.

US 5,918,960 A beschreibt die Detektion von gefälschten Objekten, insbesondere von gefälschten Banknoten. Hierfür wird UV-Licht einer Lichtquelle auf eine Probe gelenkt und die Menge des von der Probe reflektierten UV-Licht mit einer ersten Photozelle gemessen und die Menge des Fluoreszenzlichts der Probe mit einer zweiten Photozelle gemessen. Beide ermittelten Mengen werden mit Referenzwerten vergleichen. Nur wenn beide ermittelten Mengen vorgegebene Kriterien erfüllen, wird die Probe als echt identifiziert.

Der Erfindung liegt somit die Aufgabe zugrunde, ein Kalibrationsverfahren für eine Photolumineszenzmessvorrichtung, sowie ein Messverfahren anzugeben, mit deren Hilfe eine einfache und schnelle absolute Bestimmung einer Photolumineszenzeffizienz von flächigen Proben möglich ist.

Der Erfindung liegt die Idee zugrunde, ein Kalibrierverfahren für Messvorrichtung zu schaffen, ohne hierfür auf eine lumineszierende, beispielsweise fluoreszierende, Substanz zurückgreifen zu müssen, sodass die Messergebnisse auf rein radiometrische Größen zurückgeführt werden können.

Gelöst wird die technische Aufgabe durch ein Kalibrierverfahren mit den Merkmalen des Anspruchs 1 sowie ein Verfahren zum Bestimmen einer absoluten Photolumineszenzeffizienz mit den Merkmalen des Anspruchs 2. Vorteilhafte Ausgestaltungen ergeben sich aus den Unteransprüchen.

Definitionen

Als Photolumineszenz wird hier jene Lumineszenz bezeichnet, welche bei Anregung mittels Photonen entsteht. Als Fluoreszenz wird in der Regel jene Photolumineszenz bezeichnet, bei der die emittierte Lumineszenzintensität mit einem Beenden der Anregung vollständig oder nahezu vollständig in einem Zeitfenster < 1 ns bis 1 μs endet. Als Phosphoreszenz wird dann entsprechend jene Phololumineszenz bezeichnet, bei der die emittierte Lumineszenzintensität nach dem Beenden der Anregung noch für mehr als 1 ns bzw. 1 μs messbar ist. Für die hier beschriebene Erfindung ist Photolumineszenz von besonderem Interesse, deren Lumineszenzintensität in einem Zeitfenster von weniger als 1 s nach dem Beenden der Anregung vollständig oder nahezu vollständig abklingt.

Als sichtbarer Spektralbereich wird jener Wellenlängenbereich der elektromagnetischen Dipolstrahlung bezeichnet, den menschliche Betrachter mittels ihrer Augen erfassen können. Der sich an den sichtbaren Spektralbereich anschließende Wellenlängenbereich zu kürzeren Wellenlängen wird als UV-Spektralbereich (ultravioletter Spektralbereich) bezeichnet. Licht in diesem Wellenlängenbereich wird als UV-Licht bezeichnet. Der sich zu längeren Wellenlängen an den sichtbaren Wellenlängenbereich anschließende Spektralbereich wird als infraroter Spektralbereich oder IR-Spektralbereich bezeichnet. Für die Erfindung ist insbesondere der Wellenlängenbereich von 190 nm bis 1100 nm interessant. Bevorzugt liegt die Photolumineszenzstrahlung im Wellenlängenbereich von 400 nm bis 1100 nm.

Als vorgegebener Wellenlängenbereich oder vorgegebener Spektralbereich wird hier immer ein Wellenlängenbereich angesehen, der den sichtbaren Wellenlängenbereich zumindest teilweise umfasst. Vorzugsweise ist dieser vorgegebene Wellenlängenbereich so gewählt, dass die untere Wellenlängengrenze oberhalb der Wellelänge liegt, welche für eine UV-Anregung von Photolumineszenz genutzt wird. Eine obere Wellenlängengrenze wird bei etwa 1100 nm gewählt. Der vorgegebene Wellenlängenbereich wird bevorzugt angepasst an eine Messeinrichtung so gewählt, dass diese eine nahezu von der Wellenlänge unabhängige Nachweiseffizienz für Photonen aufweist. Wird die Messeinrichtung zusammen mit einem Filter zum Begrenzen des einfallenden Wellenlängenbereichs betrieben, so kann der tatsächliche Wellenlängenbereich, in dem die Messeinrichtung empfindlich ist, größer als der vorgegebene Wellenlängenbereich sein, der dann durch den Filter mit bestimmt ist.

Die Begriffe Spektralbereich und Wellenlängenbereich werden als Synonyme verwendet.

Als Lambert-Strahler wird ein Strahler bezeichnet, dessen richtungsabhängige Intensität folgender Gesetzmäßigkeit folgt:

$$I = I_0 * \cos\alpha,$$

wobei $\alpha$ der gegen eine Flächennormale einer flachen Austrittsfläche des Strahlers gemessene Winkel ist. $I_0$ ist eine konstante Intensität.

Strahlung, welche an einem Punkt einer Ebene diffus abgestrahlt wird und eine entsprechende Strahlungscharakteristik gemäß obiger Formel bezogen auf die Flächennormale durch diesen Punkt aufweist, wird als lambertstrahlerförmige Strahlung bzw. als Strahlung bezeichnet, welche eine Lambert-Strahler-Strahlungscharakteristik aufweist.

Als Stokes-Verschiebung wird jene Energieverschiebung bezeichnet, die bei einem Photolumineszenzprozess auftritt. Während die Anregung mit einem Photon im UV-Wellenlängenbereich erfolgt, welches eine höhere Energie aufweist, erfolgt die Abstrahlung des Lumineszenzphotons mit einer Wellenlänge, welche größer als die Anregungswellenlänge ist, sodass das abgestrahlte Lumineszenzphoton eine geringere Energie als das eingestrahlte Anregungsphoton aufweist. Die Energiedifferenz zwischen den Photonen, d.h. die Energiedifferenz zwischen der Energie des Anregungsphotons und der Energie des Lumineszenzphotons, wird als Stokes-Verschiebung bezeichnet.

Errechnen lässt sich die Stokes-Verschiebung gemäß folgender Formel:

$$\Delta E = E_{Anregungsphoton} - E_{Lumineszenzphoton} = h * \nu_{Anregungsphoton} - h * \nu_{Lumineszenzphoton}$$

$$= h * (\nu_{Anregung} - \nu_{Photolumenszenz}).$$

Schreibt man diese Gleichung nach der Wellenlänge $\lambda$ unter Ausnutzung der Beziehung, dass die Lichtgeschwindigkeit c gleich dem Produkt der Wellenlänge $\lambda$ und der Frequenz $\nu$ ist,

$$c = \nu * \lambda$$

um, so ergibt sich:

$$\Delta E = h \: / \: c \: * \: (\lambda_{Luminszenz} - \lambda_{Anregung}) \: / \: (\lambda_{Anregung} \: * \: \lambda_{Lumineszenz}),$$

wobei A die Wellenlänge im Medium und c die Lichtgeschwindigkeit im Medium ist und $c = c_0 \cdot n$, wobei $c_0$ die Lichtgeschwindigkeit im Vakuum und n der Brechungsindex des Mediums ist. Für Luft kann in erster Näherung n = 1 angenommen werden.

Für eine Anregungsstrahlung mit einer Strahlungsleistung WA lässt sich eine äquivalente Strahlungsleistung unter einer Annahme einer hundertprozentigen Umwandlung in Lumineszenzphotonen errechnen. Für die äquivalente Strahlungsleistung WÄ gilt dann,

$$WÄ = WA * (1 - ( (\lambda_{Lumineszenz} - \lambda_{Anregung}) \: / \: \lambda_{Lumineszenz})).$$

Als Dynamik einer Messeinrichtung wird die Fähigkeit bezeichnet, Eingangssignale unterschiedlicher Signalstärke messen zu können.

Kann eine Messeinrichtung Eingangssignale, die sich um fünf Größenordnungen unterscheiden, jeweils linear eine vorgegebene Verstärkung verstärken, so wird ein solcher Verstärker als linear in fünf Größenordnungen bezeichnet. Die Verstärkung selber kann hiervon abweichen.

Ein Messgerät mit einer Messdynamik von mehreren Größenordnungen ist eine Messvorrichtung, welche ein Eingangssignal, dessen Wertebereich über die mehreren Größenordnungen variieren kann, mit einer nahezu konstanten, relativen Messgenauigkeit vermessen kann. Die erfindungsgemäßen Verfahren können mit einer Photolumineszenzmessvorrichtung zur Vermessung ebener Proben durchgeführt werden, welche umfasst: ein Gehäuse, welches im Innern eine Messkammer aufweist, wobei das Gehäuse die Messkammer gegen Umgebungslicht abschirmt, jedoch eine flächig ausgedehnte ebene Probenöffnung als Zugang zur Messkammer aufweist, die eine Prüfebene der Messkammer definiert, eine UV-Beleuchtungseinrichtung, die an oder in der Messkammer angeordnet ist, um mit monochromatischer UV-Anregungsstrahlung (UV-Licht) durch die Messkammer hindurch einen Ausleuchtbereich der Prüfebene in der Probenöffnung zu beleuchten, eine Messeinrichtung, welche in einem vorgegebenen Wellenlängenbereich, vorzugsweise zwischen 400 nm und etwa 1100 nm, empfindlich ist, sowie eine Ausgabeeinrichtung zum Ausgeben eines Photolumineszenzmessergebnisses, wobei vorgesehen ist, dass die Messeinrichtung relativ zu der UV-Beleuchtungseinrichtung an oder in der Messkammer so angeordnet ist, dass für jeden Punkt des Ausleuchtbereichs in der Prüfebene, der mit der UV-Beleuchtungseinrichtung bei deren Betrieb ausgeleuchtet wird, gilt, dass von Lichtstrahlung im vorgegebenen Wellenlängenbereich, welche in die Messkammer mit einer Lambert-Strahler-Strahlungscharakteristik von diesem Punkt ausgeht, ein Teil der Strahlung von der Messeinrichtung erfasst wird, und die Beleuchtungseinrichtung eine UV-Lichtquelle aufweist, die ausgebildet ist, bei vorgegebenen Betriebsparametern eine bestimmte UV-Strahlungsleistung auf den Ausleuchtbereich zu strahlen, und wobei zwischen der Messeinrichtung und der Ausgabeeinrichtung eine Auswerteeinrichtung angeordnet ist, welche mit einer Speichereinrichtung mit einem darin gespeicherten Kalibrierwert gekoppelt ist, wobei die Auswerteeinrichtung ausgebildet ist, ein Messsignal der Messeinrichtung in eine Photolumineszenzeffizienz einer Probe anhand des gespeicherten Kalibrierwertes umzurechnen. Eine solche Photolumineszenzmessvorrichtung lässt sich mittels einfacher Komponenten realisieren und ermöglicht es dennoch eine zuverlässige absolute Photolumineszenzeffizienzbestimmung an Proben vorzunehmen. Hierbei wird ausgenutzt, dass die Messeinrichtung die Photolumineszenzstrahlung spektral integriert vermisst und eine von der Wellenlänge der Photonen unabhängige Quantenausbeute aufweist. Dies bedeutet, dass jedes emittierte Lumineszenzphoton, welches von der Messeinrichtung erfasst wird, mit derselben Wahrscheinlichkeit ein Messsignal in der Messeinrichtung erzeugt und die erzeugte Signalintensität unabhängig von der Wellenlänge des erfassten Photons ist.

Erfindungsgemäß wird ein Verfahren gemäß Anspruch 1 zum Kalibrieren einer solchen Photolumineszenzmessvorrichtung vorschlagen, welche eine UV-Beleuchtungseinrichtung, sowie eine im vorgegebenen Wellenlängenbereich empfindliche Messeinrichtung sowie eine Ausgabeeinrichtung zum Ausgeben eines Photolumineszenzmessergebnisses aufweist, wobei die UV-Beleuchtungseinrichtung und die Messeinrichtung an oder in einem Gehäuse mit einer Messkammer angeordnet sind, wobei das Gehäuse die Messkammer gegen Strahlung aus der Umgebung abschirmt, jedoch eine Probenöffnung aufweist, die eine Prüfebene definiert und einen Zugang zu der Messkammer darstellt, und wobei die UV-Beleuchtungseinrichtung so angeordnet ist, dass UV-Anregungslicht (UV-Licht) der Beleuchtungseinrichtung durch die Messkammer einen Ausleuchtbereich der Probenöffnung beleuchtet und die Messeinrichtung so in der Messkammer angeordnet ist, dass der gesamte Ausleuchtbereich der Prüfebene in einem Erfassungsbereich der Messeinrichtung liegt, sodass die Messeinrichtung von jedem beliebigen Punkt des Ausleuchtbereichs in der Messkammer mit einer Lambert-Strahler-Strahlungscharakteristik eingestrahlter diffuser Lichtstrahlung im vorgegebenen Wellenlängenbereich zumindest einen Teil der Lichtstrahlung erfasst, wobei das Verfahren die Schritte umfasst:

Betreiben der UV-Beleuchtungseinrichtung mit vorgegebenen Betriebsparametern zum Erzeugen von monochromatischem UV-Anregungslicht mit einer Anregungswellenlänge $\lambda 1$, welches den Ausleuchtbereich der Prüfebene ausleuchtet; Anordnen der Probenöffnung auf einer Einlassöffnung eines Strahlungsmessgeräts und Messen einer Anregungsstrahlungsleistung WA des durch den Ausleuchtbereich der Prüfebene tretenden UV-Anregungslichts; Anordnen der Probenöffnung vor einem monochromatischen Lambert-Strahler, der monochromatisches Licht mit bekannter Strahlungsleistung mit einer Kalibrationswellenlänge $\lambda 2$ im vorgegebenen, vorzugsweise sichtbaren, Wellenlängenbereich mit einer Lambert-Strahler-Strahlungscharakteristik abstrahlt, wobei eine Abstrahlfläche des Lambert-Strahlers einer Ausdehnung der Ausleuchtfläche entspricht und das Anordnen der Photolumineszenzmessvorrichtung relativ zu dem Lambert-Strahler so erfolgt, dass die Ausleuchtfläche und die Abstrahlfläche des Lambert-Strahlers in der Prüfebene zusammenfallen und kein Umgebungslicht in die Messkammer eindringt, Messen der Strahlungsleistung des Lambert-Strahlers mit der Messeinrichtung und Erfassen eines Strahlungsleistungskalibrationsmesswerts MK, während die UV-Beleuchtungseinrichtung nicht im Betrieb ist und Errechnen einer äquivalenten Anregungsstrahlungsleistung WÄ anhand der gemessenen Anregungsstrahlungsleistung, indem eine mit der Stokes-Verschiebung der UV-Anregungswellenlänge $\lambda 1$ zu der Kalibrationswellenlänge $\lambda 2$ einhergehende Leistungsänderung berücksichtigt wird, wobei sich die äquivalente Anregungsstrahlungsleistung WÄ gemäß folgender Formel ergibt:

$$W\ddot{A} = WA * (1 - (\lambda 2 - \lambda 1) / \lambda 2),$$

und Ermitteln eines Kalibrationswertes K aus einem Verhältnis der bekannten Strahlungsleistung WB des Lambert-Strahlers und einem Produkt der errechneten äquivalenten UV-Anregungsstrahlungsleistung WÄ und dem Strahlungsleistungskalibrationsmesswert MK

$$(K = WB / (W\ddot{A} * MK)),$$

und Ablegen des Kalibrierwertes K, sodass nachfolgende Messwerte $MM_j$ der Messeinrichtung, die bei einer Beleuchtung des Ausleuchtbereichs der Prüfebene mittels der UV-Beleuchtungseinrichtung bei den vorgegebenen Betriebsparametern für vor der Probenöffnung angeordnete flache Proben gemessen sind, in eine Photolumineszenzeffizienz $FE_j$ der Probe umrechenbar sind gemäß der Formel:

$$FE_j = MM_j * K.$$

Dieses Kalibrierverfahren zeichnet sich dadurch aus, dass lediglich eine radiometrische Messeinrichtung bzw. ein kalibrierter oder geeichter Lambert-Strahler notwendig sind, um die Messeinrichtungen zu kalibrieren, sodass anschließend für die Proben eine Photolumineszenzeffizienz angegeben werden kann, welche eine absolute Photolumineszenzeffizienz ist.

Ein erfindungsgemäßes Messverfahren zum Bestimmen einer absoluten Photolumineszenzeffizienz einer ebenen Probe, wie in Anspruch 2 definiert, umfasst daher die Schritte:

Anordnen der Probe vor einer Probenöffnung eines Gehäuses, die einen Zugang zu einer im Inneren des Gehäuse befindlichen Messkammer darstellt sowie eine Prüfebene definiert, wobei die Probe vor die Probenöffnung so angeordnet wird, dass die Probe an die Prüfebene angrenzt oder mit dieser zusammenfällt (und die Probenöffnung gegen Umgebungslicht verschließt); Erzeugen von monochromatischer UV-Anregungsstrahlung mit einer UV-Beleuchtungseinrichtung bei vorgegebenen Betriebsparametern, um mit einer vorermittelten UV-Anregungsstrahlungsleistung durch die Messkammer hindurch einen Ausleuchtbereich der Prüfebenen mit der bereitgestellten monochromatischen UV-Anregungsstrahlung auszuleuchten; zeitgleiches Messen einer im vorgegebenen Wellenlängenbereich spektral integrierten Lumineszenzintensität der an der Probe erzeugten und in die Messekammer abgestrahlten Lumineszenzstrahlung mit einer Messeinrichtung, deren Erfassungsbereich so ausgebildet ist, dass für jeden Punkt des Ausleuchtbereichs der Prüfebene gilt, dass von diffus in die Messkammer mit einer Lambert-Strahler-Strahlungscharakteristik von diesem Punkt abgestrahlter Lichtstrahlung zumindest ein Teil der Lichtintensität (unabhängig von der konkreten Wellenlänge) von der Messeinrichtung erfasst wird; Erfassen eines Kalibrierwertes oder Auslesen des Kalibrierwertes aus einer Speichereinrichtung und Errechnen einer Photolumineszenzeffizienz anhand der gemessenen Lumineszenzintensität und dem Kalibrierwert, wobei der Kalibrierwert die vorermittelte Anregungsstrahlungsleistung mit einem Intensitätsmesswert für einen monochromatischen Lambert-Strahler mit bekannter Strahlungsleistung und einer Abstrahlfläche, die der des Ausleuchtbereichs entspricht, in Beziehung setzt; und Ausgeben und/oder Bereitstellen der errechneten Photolumineszenzeffizienz. Die Erfindung macht von der Erkenntnis Gebrauch, dass UV-Beleuchtungseinrichtungen herstellbar sind, die bei vorgegebenen Betriebsparametern reproduzierbar eine Anregungsstrahlungsleistung im UV-Bereich erzeugen. Kombiniert man eine solche UV-Beleuchtungseinrichtung mit einer Messeinrichtung, welche im vorgegebenen Wellenlängenbereich integrierend die erfasste Lumineszenzintensität erfasst und so ausgebildet ist, dass das erzeugte Messsignal für ein erfasstes Lumineszenzphoton unabhängig von dessen Wellenlänge ist, so kann über eine einmal vorgenommenen Kalibrierung, die anhand eines hinsichtlich seiner Strahlungsleistung bekannten Lambert-Strahlers ausgeführt ist, eine Bestimmung einer absoluten Photolumineszenzeffizienz vorgenommen werden.

Als geeignete UV-Lichtquelle die reproduzierbar dieselbe Strahlungsleistung bei vorgegebenen Betriebsparametern erzeugen, eignen sich besonders Leuchtdioden oder Laserdioden. Somit sieht eine Ausführungsform der Erfindung vor, dass die UV-Beleuchtungseinrichtung als UV-Lichtquelle mindestens eine Leuchtdiode oder Laserdiode umfasst. Um eine erwünschte Anregungsstrahlungsleistung zu erhalten, ist es jedoch möglich, auch mehrere Leuchtdioden oder Laserdioden der UV-Beleuchtungseinrichtung zu kombinieren. Eine konstante Strahlungsleistung erhält man, indem der Treiberstrom von einer Konstantstromquelle geliefert wird. Ein Betriebsparameter der eingehalten werden muss, ist somit der Betriebsstrom einer LED. Ferner muss die Temperatur einen vorgegebenen Wert aufweisen.

Da zumindest Leuchtdioden und auch einige andere UV-Lichtquellen, beispielsweise Hochdruckgasentladungslampen, nicht nur Licht einer UV-Spektrallinie emittieren, ist zum Erzeugen einer monochromatischen UV-Anregungsstrahlung bei einer Ausführungsform vorgesehen, dass die UV-Beleuchtungseinrichtung eine Einrichtung zur Eingrenzung der Anregungslichtwellenlänge umfasst, um das in die Messkammer eingestrahlte UV-Licht, d.h. die UV-Anregungsstrahlung, auf eine Wellenlänge oder einen begrenzten Wellenlängenbereich einzugrenzen. Als Einrichtung zur Eingrenzung kommen absorbierende, beugende oder brechende Strukturen, insbesondere Filter, Gitter oder Prismen in Frage. Filter sind bevorzugt.

Als geeignete Photodetektoren für eine Messeinrichtung kommen Photodioden in Betracht. Aus dem Stand der Technik sind Photodioden bekannt, welche eine gewünschte Quanteneffizienz aufweisen, welche zumindest in einem bestimmten Spektralbereich nahezu unabhängig von der Wellenlänge des nachgewiesenen Photons ist. Dies bedeutet, dass ein erzeugtes Messsignal proportional zu der Anzahl der erfassten Photonen ist, unabhängig davon, welche Wellenlänge diese Photonen konkret aufweisen. Daher sieht eine Ausführungsform der Erfindung vor, dass die Messeinrichtung als Photodetektor mindestens eine Photodiode umfasst. Als Photodiode eignen sich z.B. Si-Photodioden, deren Messempfindlichkeit, angegeben in Stromstärke pro Strahlungsleistung, abhängig von der Wellenlänge, mit dieser Wellenlänge nahezu linear über den optischen Spektralbereich zunimmt. Diese Zunahme der Messempfindlichkeit mit der Wellenlänge wird jedoch dadurch kompensiert, dass die Strahlungsleistung des Lumineszenzlichts (bei konstanter Lumineszenzeffizienz und konstanter Anregung) aufgrund der Stokes-Verschiebung mit der Wellenlänge abnimmt. Die Quanteneffizienz der Photodiode ist somit deutlich unabhängiger von der Wellenlänge als die spektrale Messempfindlichkeit, welche in Stromstärke pro Strahlungsleistung angegeben wird oder in SI-Einheiten in A/W, wobei A für Ampere und W für Watt steht..

Wird eine besonders große Genauigkeit beim Vergleich verschiedener lumineszenzeierender Proben oder Stoffe mit deutlich unterschiedlichen Emissionsspektren benötigt, so kann ein weiterer zusätzlicher Korrekturfilter (vor dem Detektor bzw. im Detektionsstrahlengang) eingefügt werden, der die reale spektral abhängige Quanteneffizienz (QE) des Detektors korrigiert, wodurch in der Kombination des Korrekturfilters und des Detektors eine konstante Quantenausbeute oder Quanteneffizienz im gewünschten Detektionsspektralbereich, dem vorgegebenen Wellenlängenbereich, erreicht wird.

Ferner ist auch alternativ oder zusätzlich eine mathematische Korrektur möglich, wenn das Emissionsspektrum der zu vermessenden Lumineszenzprobe bekannt ist. Die spektral abhängige Quantenausbeite der Messeinrichtung muss für diesen Fall natürlich auch bekannt sein.

Um sicherzustellen, dass von der Messeinrichtung keine UV-Anregungsstrahlung wahrgenommen wird, welche an der Probe oder unbeabsichtigt an Wänden der Messkammer reflektiert wird, ist bei einer bevorzugten Ausführungsform vorgesehen, dass die Messeinrichtung einen Langpassfilter umfasst, der das UV-Licht blockiert, sodass das zur Anregung verwendete von der UV-Beleuchtungseinrichtung eingestrahlte UV-Anregungsstrahlung nicht zu einem Photodetektor der Messeinrichtung gelangt.

Um praxistaugliche Messergebnisse erzielen zu können, ist es notwendig, dass die Messeinrichtung eine hohe Dynamik aufweist und Lumineszenzintensitäten nachweisen kann, die sich idealerweise um bis zu vier- oder fünf Größenordnungen unterscheiden. Hierfür kann in der Messeinrichtung ein Verstärker vorgesehen sein, der ein Eingangssignal linear um fünf oder sechs Größenordnungen verstärken kann. Ebenso ist es möglich, dass die Verstärkung des Verstärkers angepasst an die ermittelte Lumineszenzintensität angepasst werden kann, die von der Messeinrichtung bereitgestellten Messergebnisse jedoch über den gesamten Messbereich einen linearen Zusammenhang zu der erfassten Lumineszenzintensität aufweisen. Ebenso ist es alternativ möglich, einen Verstärker und eine Messeinrichtung mit geringerer Auflösung z.B. 3 Größenordnungen zu verwenden, wenn dieser in Kombination mit einer einstellbaren oder umschaltbaren UV-Beleuchtungseinrichtung eingesetzt wird. Kann die UV-Beleuchtungseinrichtung beispielsweise bei weiteren Arbeitspunkten mit einem zehntel (1/10) und einem hundertstel (1/100) Ausgangsstrahlungsleistung betrieben werden, so kann das gesamte System wiederum Photolumineszenzintensitäten über einen Bereich von 5 bis 6 Größenordnungen messen. Die Ausgangsstrahlungsleistungen dieser weiteren Arbeitspunkte müssen ebenfalls bekannt sein und/oder kalibriert werden. In einer weiteren Ausführungsvariante wird ein logarithmischer Verstärker eingesetzt, in den der Photostrom bzw. das vorverstärkte Messsignal einer Messeinrichtung eingespeist wird und der statt einer linearen Verstärkercharakteristik eine logarithmische Verstärkercharakteristik aufweist. Beispielhaft sei hier eine Ausgangsspannung von 1,0 V pro Dekade genannt, so würde beispielsweise eine Ausgangsspannung von 1,0 V beispielsweise einem 10-fachen Signal, eine Ausgangsspannung von 2,0V einem 100-fachen Signal usw. und ein Ausgangssignal von 5,0V einem 100.000-fachen Signal entsprechen. Das logarithmierte Signal muss natürlich wiederum in einen linearen Ausgabewert umgerechnet werden. Ebenso muss bei einem Kalibrierverfahren ein besonderes Augenmerk auf die Linearisierung bzw. Linearität der Messeinrichtung und des Verstärkers gesetzt werden. Das Gehäuse der Vorrichtung ist bevorzugt als Metallblock ausgebildet. In diesem sind die UV-Anregungsquelle sowie der Photodetektor und ggfs. benötigte Anregungsfilter der UV-Beleuchtungseinrichtung sowie ein Langpassfilter der Messeinrichtung integriert. Die Filter sind hierbei vorzugsweise eingeschraubt oder eingeklebt und der Photodetektor sowie die UV-Lichtquelle vorzugsweise eingegossen, um eine stabile mechanische Anordnung zu gewährleisten. Hierdurch kann sichergestellt werden, dass die Anregungs- und Nachweisgeometrie sich zwischen der ausgeführten Kalibrierung und der tatsächlichen Messung nicht verändern kann.

Bei einer Weiterbildung der Vorrichtung ist durch das Gehäuse in die Messkammer eine Lichtleitfaser, die gegebenenfalls eine Kollimator-Linse umfasst, geführt und dort so angeordnet, dass ein Teil von aus der Prüfebene in die Messkammer abgestrahlten Lichts erfasst wird, um dieses erfasste Licht zu einer optischen Auswerteeinrichtung, insbesondere einem Spektrometer, zu führen. Dies ermöglicht es, die integral erfasste Lumineszenzeffizienz einer Probe mit einer spektralen Auswertung des Lumineszenzspektrums zu verknüpfen. Eine konkrete Zuordnung einer Lumineszenzintensität zu einer bestimmten Spektrallinie ist jedoch nur dann möglich, wenn das Lumineszenzspektrum lediglich eine Spektrallinie aufweist.

Bei einer bevorzugten Bauform weist das Gehäuse eine flache Unterseite auf, in der die Probenöffnung ausgebildet ist. Bei einer solchen Ausführungsform kann das Gehäuse auf eine flächige Probe aufgesetzt werden, um eine Messung auszuführen.

Innenwände der Messkammer sind vorzugsweise absorbierend ausgebildet, um eine Reflektion von Lumineszenzstrahlung und/oder von UV-Licht der Anregungsstrahlung zu verhindern. So werden Verfälschungen der Messergebnisse vermieden.

Um zu überprüfen, dass die UV-Beleuchtungseinrichtung auch tatsächlich UV-Anregungsstrahlung mit der vorermittelten, bei der Kalibration bestimmten Strahlungsleistung bereitstellt, ist bei einer Ausführungsform vorgesehen, dass ein Teil der UV-Anregungsstrahlung (des UV-Lichts) der UV-Beleuchtungseinrichtung auf einen Kontrolldetektor geführt ist, welcher eine UV-Lichtintensität erfasst, und der Kontrolldetektor mit einer Überwachungseinrichtung gekoppelt ist, die eine gemessene UV-Lichtintensität mit einer vorgegebenen UV-Lichtintensität vergleicht und ein Kontrollsignal ausgibt, wenn eine Abweichung zwischen der gemessenen UV-Lichtintensität und der vorgegebenen UV-Lichtintensität oberhalb einer Toleranzschwelle erfasst ist. Das Kontrollsignal kann verwendet werden, um auf die Beleuchtungseinrichtung rückzuwirken, um eine Angleichung der erfassten UV-Lichtintensität mit der vorgegebenen UV-Lichtintensität zu erreichen. Das Kontrollsignal kann jedoch auch nur verwendet werden, um darauf aufmerksam machen, dass die Messeinrichtung nicht wie spezifiziert arbeitet. Ebenso ist eine lediglich rechnerische Korrektur des Messergebnisses anhand des Kontrollsignals möglich, ohne jedoch in regelnder Weise auf die UV-Beleuchtungseinrichtung einzuwirken.

Bei einer weiteren Ausführungsform ist vorgesehen, dass zusätzlich oder alternativ Betriebsparameter, insbesondere die Temperatur der UV-Lichtquelle und/oder des Photodetektors überwacht werden. Insbesondere für die UV-Lichtquelle in Form einer Leuchtdiode gilt, dass die abgestrahlte Strahlungsleistung abhängig von der Temperatur der Leuchtdiode ist. Ist das Gehäuse als Metallblock ausgebildet, so kann eine stabile Temperatur für eine in einer Bohrung des Metallblocks angeordnete und vergossene Leuchtdiode erreicht werden, die mit einem Konstantstrom betrieben wird. Möglich ist es, unterschiedliche Kalibrierwerte für einen Gelegenheitsbetrieb, bei dem die Beleuchtungseinrichtung nur für eine kurze Zeitspanne eingeschaltet ist und für eine Zeitspanne, die ein oder zwei Größenordnungen größer ist, ausgeschaltet ist, und für einen Betriebszustand ausgeführt werden, bei dem die UV-Beleuchtungseinrichtung über einen längeren Zeitraum, der die Zeitdauer zum Ausführen einer Messung deutlich überschreitet, konstant betrieben wird. Ebenso ist es möglich, ein oder mehrere Heizelemente und/oder Kühlelement in dem Gehäuse vorzusehen, um dieses auf eine konstante Betriebstemperatur zu heizen und/oder zu kühlen, sodass unabhängig von einer Betriebsdauer der UV-Beleuchtungseinrichtung in dem Gehäuse stets eine konstante Temperatur herrscht und somit immer dieselbe UV-Anregungsstrahlungsleistung von der Beleuchtungseinrichtung zur Verfügung gestellt wird.

Vorzugsweise sind die Messeinrichtung und die UV-Anregungsquelle so relativ zueinander angeordnet, dass eine Einstrahlrichtung der UV-Anregungsstrahlung und eine Erfassungsrichtung der Messeinrichtung einen Winkel im Bereich von 5° bis 70° einschließen. Der Winkel kann auch in einem Bereich von 10° bis 50° gewählt werden. Noch bevorzugter liegt der Winkel im Bereich zwischen 20° und 40°. Er sollte möglichst klein gewählt werden. Zusätzlich ist jedoch auch ein Abstand zwischen Messeinrichtung und Prüfebene und UV-Anregungsquelle und Prüfebene vorzugsweise möglichst gering gewählt. Es ist somit ein Kompromiss im Hinblick auf die Abmessungen der einzelnen benötigten Komponenten der Messeinrichtung und der UV-Anregungsquelle und gegebenenfalls weiterer optischer Komponenten in den jeweiligen Strahlengängen zu finden. Bei einer besoners bevorzugten Ausführungsform wird daher der Winkel im Bereich zwischen 25° und 35°gewählt. Die Erfassungsrichtung ist die mittlere Erfassungsrichtung und die Einstrahlrichtung die mittlere Ausbreitungsrichtung der UV-Anregungsstrahlung.

Das Verfahren zum Bestimmen einer absoluten Photolumineszenzeffizienz, wird vorzugsweise mit der oben beschriebenen Vorrichtung ausgeführt.

Das Verfahren zum Kalibrieren einer Photolumineszenzmessvorrichtung wird ebenfalls vorzugsweise an einer Ausführungsform der oben beschriebenen Photolumineszenzmessvorrichtung und mithilfe einer solchen beschriebenen Ausführungsform der Photolumineszenzmessvorrichtung ausgeführt.

Nachfolgend wird die Erfindung unter Bezugnahme auf eine Zeichnung näher erläutert:

Hierbei zeigt

Fig. 1 eine schematische Darstellung einer Photolumineszenzmessvorrichtung;

Fig. 2a, 2b schematische Darstellungen zur Messung der Anregungsstrahlungsleistung und zum Bestimmen eines Strahlungsleistungskalibrationsmesswertes für einen Lambert-Strahler bekannter Strahlungsleistung;

Fig.3 eine Messkurve, die eine Empfindlichkeit normiert auf die Strahlungsleistung in Abhängigkeit von der Wellenlänge grafisch darstellt.

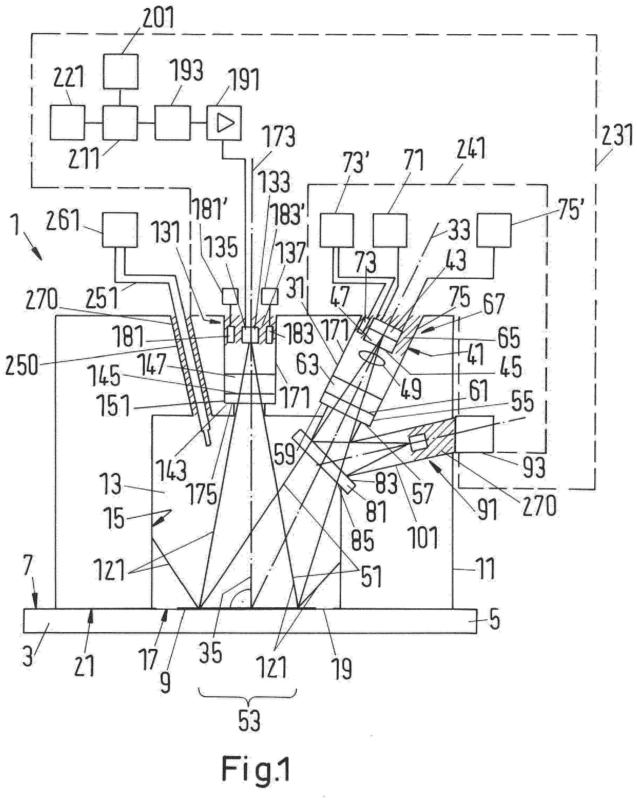

In Figur 1 ist schematisch eine Photolumineszenzmessvorrichtung 1 zur absoluten Bestimmung einer Photolumineszenzeffizienz von einer ebenen Probe 3 dargestellt. Die ebene Probe 3 ist beispielsweise ein Substrat 5 auf dessen Oberseite 7 ein flächig ausgedehnter Aufdruck 9 angebracht ist, der mittels einer Photolumineszenztinte gedruckt ist.

Die Photolumineszenzmessvorrichtung 1 umfasst ein Gehäuse 11, welches beispielsweise als ein Metallblock ausgebildet ist. Das Gehäuse 11 umschließt eine Messkammer 13, deren Innenwände 15 lichtabsorbierend ausgebildet sind. Bei dem Gehäuse 11 kann es sich beispielsweise um einen Aluminiumblock handeln, in den die Messkammer 13 mittels eines spanabhebenden Bearbeitungsverfahrens eingearbeitet ist. Die Innenwände 15 sind beispielsweise schwarz eloxiert.

Das Gehäuse 11 weist eine Probenöffnung 17 auf, die zugleich eine Prüfebene 19 definiert. Die Prüfebene ist jene Ebene, welche durch die Ebene der Probenöffnung 17 vorgegeben ist. Bei der dargestellten Ausführungsform schließt eine Unterseite 21 des Gehäuses 11 bündig mit der Probenöffnung 17 ab, sodass die Unterseite 21 und die Prüfebene 19 in einer gemeinsamen Ebene liegen. Für eine Messung wird das Gehäuse 11 so vor einer Probe 5 angeordnet, dass die Probe 5 bündig an die Prüfebene 19 der Photolumineszenzmessvorrichtung 1 angrenzt.

In einer Bohrung 31, deren Zentralachse 33 gegenüber einer Oberflächennormale 35 der Prüfebene 19 einen Winkel von etwa 20°- 40° einschließt, ist eine UV-Beleuchtungseinrichtung 41 angeordnet. Es sind auch größere Winkel oder kleiner Winkel möglich. Bevorzugt werden kleine Winkel. Die Beleuchtungseinrichtung 41 umfasst in der dargestellten Ausführungsform zwei auf einer Platine 43 angeordnete Leuchtdioden 45, 47, welche mit einer Abbildungslinse 49 gekoppelt sind, um erzeugte UV-Anregungsstrahlung 51 auf die Prüfebene 19 zu strahlen, sodass ein Ausleuchtbereich 53 der Prüfebene 19 mit der UV-Anregungsstrahlung 51 ausgeleuchtet wird. An Stelle der einen Abbildungslinse 49 könnten auch zwei Abbildungslinsen oder Abbildungslinsensysteme genutzt werden, die jeweils mit den entsprechenden Leuchtdioden 45, 47 gekoppelt sind. Es kann auch nur eine Leuchtdiode vorgesehen sein. Andere Ausführungsformen können mehr als zwei Leuchtdioden umfassen.

Um sicherzustellen, dass nur UV-Licht einer Spektrallinie im UV-Anregungslicht 51 enthalten ist, welches auf die Prüfebene 19 trifft, ist in der Bohrung 31 zusätzlich ein Kurzpass- oder Bandpassfilter 55, beispielsweise ein UG1-, UG-5 oder UG11-Filter der Firma Schott, Mainz, oder ein vergleichbarer Filter der Firma Hoya angeordnet. Alternativ können auch dielektrische Interferenzfilter verwendet werden. Ein Vorteil solcher Filter besteht darin, dass diese eine größere Flexibilität bei einer Wahl der Filter-Parameter wie Kanten-Wellenlänge oder Kantenwellenlängen, Steilheit der Kanten, optischer Dichte etc. ermöglichen. Dieser Bandpassfilter 55 wird auch als Anregungsfilter bezeichnet, da er die Anregungsstrahlung 51 filtert. Der Bandpassfilter 55 liegt mit einer Seite 57 gegen einen Flansch 59 an, der über eine Verjüngung der Bohrung 31 zur Messkammer 13 hin ausgebildet ist. An einer gegenüberliegenden Seite 61 des Bandpassfilters 55 ist in die Bohrung ein Halterungsring 63, welcher ein Außengewinde hat, in ein entsprechendes Innengewinde der Bohrung 31 eingeschraubt und fixiert hierüber das Bandpassfilter 55. Zwischen dem Flansch 59 und dem Bandpassfilter 55 und zwischen dem Halterungsring 63 und dem Bandpassfilter 55 können Federelemente oder Abstandselemente angeordnet sein, welche hier nicht dargestellt sind. Bei einer alternativen Ausführungsform kann der Bandpassfilter 55 auch eingeklebt sein.

Die Platine 43 mit den beiden LED's 45, 47 und der daran befestigten Abbildungslinse 49 sind mit einer Füllmasse 65 in der Bohrung 31 vergossen. Hierüber wird eine gute mechanische Fixierung der durch die Leuchtdioden 45, 47 gebildeten UV-Lichtquelle 67 realisiert. Die Leuchtdioden 45, 47 werden mit einer Konstantstromquelle 71 betrieben, sodass eine festgelegt Lichtmenge, d.h. Anregungsstrahlungsleistung auf den Ausleuchtbereich 53 der Prüfebene 19 gestrahlt wird. Eine leichte Abhängigkeit der erzeugten Strahlungsleistung kann es von der Temperatur geben, sodass bei der dargestellten Ausführungsform zum einen ein Temperaturmessfühler 73, beispielsweise in Form eines PT100-Widerstands, mit einer Temperaturmessvorrichtung 73', und ein Heiz-/Kühlelement 75 mit einer Regeleinheit 75' angeordnet sind, um eine konstante, ggf. geregelte Temperatur des Gehäuses im Bereich der Leuchtdioden 45, 47 zu gewährleisten.

Um einen Ausfall und/oder eine Alterung einer der Leuchtdioden 45, 47 zuverlässig erkennen zu können, ist bei manchen Ausführungsformen, wie beispielsweise der dargestellten Ausführungsform, im Strahlengang der UV-Anregungsstrahlung 51 eine Quarzglasplatte 81 als Strahlteiler angeordnet, welcher an einer Vorderseite 83 und einer Rückseite 85 jeweils etwa 4 % der Strahlungsleistung auskoppelt und in eine Kontrollmesseinrichtung 91 reflektiert. Die Kontrollmesseinrichtung 91 ist beispielsweise eine Photodiode. Diese ist vorzugsweise in einer weiteren Bohrung 101 des Gehäuses 11 angeordnet. Eine Kontrolleinrichtung 93 kann eine gemessene Strahlungsintensität der UV-Anregungsstrahlung 51 mit einer erwarteten Intensität vergleichen und für den Fall einer Abweichung oberhalb einer Toleranzschwelle ein Kontrollsignal ausgeben.

In einer weiteren Ausführungsvariante können auch die parasitären Reflexionen des Anregungsfilters (z.B. des bereits erwähnten Schott UG-1-Filters) gleichzeitig zur Strahlauskopplung genutzt werden. Ein extra Strahlteiler-Element kann dann entfallen.

Die auf die Probe 5 auftreffende UV-Anregungsstrahlung 51 verursacht in dem Aufdruck 9, welcher photolumineszierende (z.B. fluoreszierende) Stoffe enthält, eine Anregung einer Photolumineszenz. Der Aufdruck 9 emittiert somit Photolumineszenzstrahlung 121 im Bereich des Ausleuchtbereichs 53. Die Abstrahlcharakteristik des Lumineszenzlichts bzw. Fluoreszenzlichts 121 entspricht der eines Lambert-Strahlers. Das Photolumineszenzlicht 121 gelangt zumindest teilweise in eine Messeinrichtung 131, welche sensitiv im vorgegebenen Spektralbereich ist. Die Messeinrichtung 131 umfasst als Photodetektor 133, in der dargestellten Ausführungsform eine Photodiode 135, die auf einer Platine in noch einer weiteren Bohrung 171 angeordnet ist. Eine Mittelachse 173 der noch weiteren Bohrung 171 ist kollinear zur Oberflächennormale 35 der Prüfebene 19 und verläuft vorzugsweise mittig durch den Ausleuchtbereich 53. Um sicherzustellen, dass von der UV-Anregungsstrahlung 51 keine Anteile in der Messeinrichtung 131 nachgewiesen werden, umfasst die Messeinrichtung 131 eine Langpassfilter 151, der ein Passieren von UV-Strahlung blockiert.

Mit einer Seite 143 liegt der Langpassfilter 151 in der dargestellten Ausführungsform gegen einen Flansch 175 der noch weiteren Bohrung 171 an, welcher über eine Verjüngung der noch weiteren Bohrung 171 ausgebildet ist. Eine gegenüberliegende Seite 145 des Langpassfilters 151 wird mittels eines weiteren Halterings 147 in der noch weiteren Bohrung 171 fixiert. Dieser weitere Haltering 147 weist ein Außengewinde auf, welches mit einem Innengewinde in der noch weiteren Bohrung 171 korrespondiert.

Die Photodiode 135 ist ähnlich wie die Leuchtdioden 45, 47 mittels einer weiteren Füllmasse 137 eingegossen und fixiert.

Auch im Bereich der Messeinrichtung 131 können ein weiterer Temperaturmessfühler 181 sowie ggf. ein Heiz-/Kühlelement 183 angeordnet sein, welche mit einer weiteren Temperaturmesseinrichtung 181' und einer weiteren Regeleinheit 183' zusammenwirken. Ein rohes Messsignal der Photodiode 135 ist vorzugsweise auf einen Verstärker 191 geführt und anschließend auf eine Messsignalerzeugungseinrichtung 193, welches beispielsweise ein AD-Wandler sein kann. Über den Verstärker 191, dessen Verstärkungsfaktor gezielt wählbar ist oder alternativ einen festgelegten Verstärkungsfaktor, z.B. in der Größenordnung $10^5$ bis $10^6$, aufweist, kann im Zusammenspiel mit einem AD-Wandler ein Messsignal erzeugt werden, welches die erfasste, integrierte Strahlungsleistung der Lumineszenzstrahlung repräsentiert.

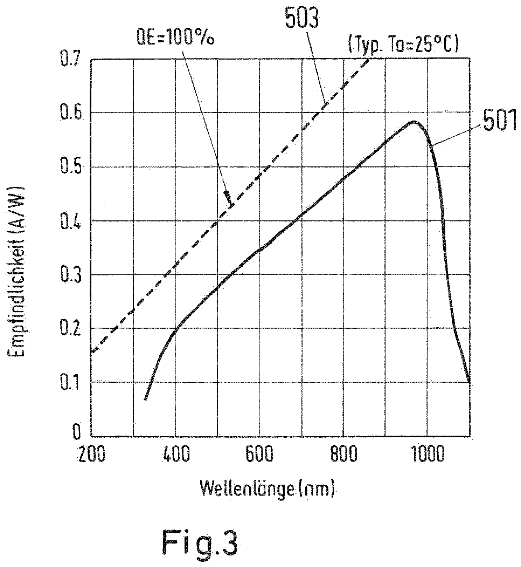

Wie in Figur 3 dargestellt ist, steigt die Empfindlichkeit einer Photodiode, die in Form einer Kennlinie 501 dargestellt ist, mit zunehmender Wellenlänge. Dies bedeutet, dass die Signalstärke, ein Stromsignal, pro Strahlungsleistung mit der Wellenlänge zunimmt. Da jedoch gleichzeitig mit der Zunahme der Wellenlänge die mit der Photolumineszenzumwandlung des Anregungslichts in Lumineszenzlicht einhergehende Stokes-Verschiebung dazu führt, dass die Strahlungsleistung bei gleicher Umwandlungseffizienz, d.h. gleicher Photolumineszenzeffizienz der Probe abnimmt, wird die gemessene Strahlungsleistung der Lumineszenzstrahlung nahezu unabhängig von der spektralen Verteilung der Lumineszenzphotonen ist. Die Empfindlichkeit wird auch Messempfindlichkeit genannt.

Eine gestrichelte Gerade 503 gibt eine erwartete Kennlinie für den Fall einer 100%igen Quantenausbeute (QE) an.

Über einen in einem Speicher 201 abgelegten Kalibrierwert, kann eine Auswerteeinrichtung 211 eine absolute Photolumineszenzeffizienz der Probe ermitteln (siehe Figur 1). Der Kalibrierwert K stellt eine Beziehung zwischen der zuvor ermittelten, bekannten UV-Anregungsstrahlungsleistung WA der UV-Anregungsstrahlung 51 und einem Kalibrationsmesswert MK her, der für eine vorbekannte Strahlungsleistung WB eines Lambert-Strahlers ermittelt ist. Da das Messsignal des Photodetektors 133 nahezu linear mit der erfassten Lumineszenzstrahlung zu- bzw. abnimmt, kann unter Annahme dieser Linearität der für die vorbekannte Strahlungsleistung des Lambert-Strahlers gemessene (Strahlungsleistungs-)Kalibrationsmesswert MK mit einer äquivalenten Anregungsstrahlungsleistung WÄ in Beziehung gesetzt werden, die bei Annahme einer 100 prozentigen Photolumineszenzeffizienz FE und einer Stokes-Verschiebung der UV-Anregungswellenlängen zu der Kalibrationswellenlänge, bei der der Lambert-Strahler strahlt, errechnet ist. Die Auswerteeinrichtung 211 errechnet aus dem Kalibrierwert K und einem Messwert MM der Probe 3 die Photolumineszenzeffizienz FE. Dieser wird über eine Ausgabeeinrichtung 221 ausgegeben. Die Ausgabeeinrichtung kann als analoge oder digitale Anzeige und/oder als Kommunikationsschnittstelle ausgebildet sein.

Die Ausgabeeinrichtung 221, die Auswerteeinrichtung des Speichers 201, die Messsignalerzeugungseinrichtung 133 sowie nicht dargestellte Ansteuerungselektronik für die Messeinrichtung 131 ebenso wie die weitere Temperaturmesseinrichtung 181' für den Temperaturfühler 181 und die weitere Regeleinheit 183', das Heiz-/Kühlelement 183 können in einem Steuergerät 231 zusammengefasst sein. Auch die Konstantstromquelle 69 sowie die Temperaturmesseinrichtung 73' für den Temperaturmessfühler 73 und die Regeleinheit 75' für das Heiz-/Kühlelement 75 können in das Steuergerät 231 integriert sein oder einem weiteren Steuergerät 241 zusammengefasst sein. Gleiches gilt für die Kontrolleinrichtung 93 sowie die Ansteuerungselektronik der Kontrollmesseinrichtung.

In dem Gehäuse ist ferner in einer zusätzlichen Bohrung 250 ausgebildet, in der eine Lichtleitfaser 251 angeordnet ist, die einen Teil der der Lumineszenzstrahlung zu einer optischen Auswerteeinrichtung 261, beispielsweise einem Spektrometer oder einem Spektrographen, für eine weitere Auswertung der Lumineszenzstrahlung führt. Die Lichtleitfaser 251 ist ebenso wie die Kontrollmesseinrichtung 91 mit einer Füllmasse 270 vergossen.

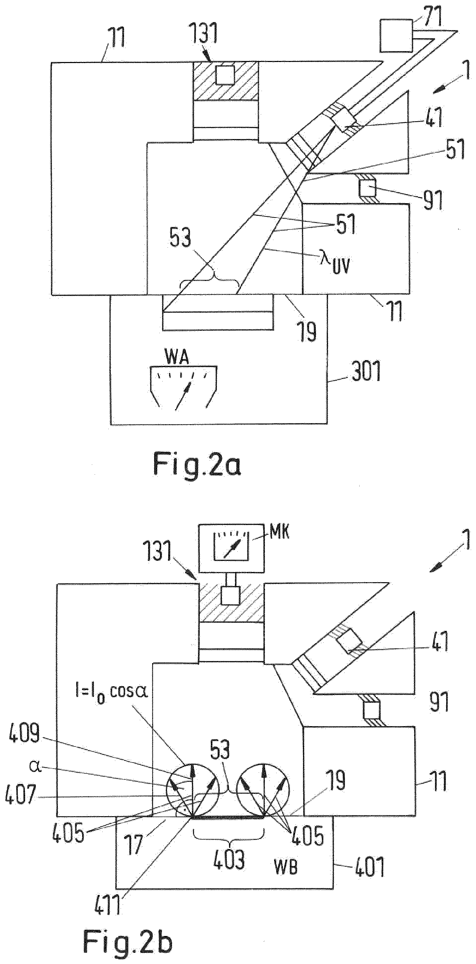

Eine entsprechende Kalibration soll anhand von Figuren 2a und 2b erläutert werden. Die einzelnen Merkmale und Vorrichtungen sind nur schematisch und vereinfacht dargestellt. Nur die wesentlichen Komponenten sind dargestellt. Zunächst wird die Photolumineszenzmessvorrichtung 1 auf einer Strahlungsmesseinrichtung 301 so angeordnet, dass die durch den Ausleuchtbereich 53 tretende Strahlungsleistung der UV-Anregungsstrahlung 51 vollständig von der Strahlungsmesseinrichtung 301 erfasst wird. Diese bestimmt die Strahlungsleistung des UV-Anregungslichts 51 in absoluten Messeinheiten, wobei die UV-Beleuchtungseinrichtung bei vorgegebenen Betriebsparametern, insbesondere einem vorgegebenem konstantem Betriebsstrom der Konstantstromquelle 71 und einer vorgegebenen Temperatur betrieben wird. Wiederholungen der Messung und Messung bei anderen abweichenden Temperaturen bzw. leicht variierenden Betriebsströmen können ausgeführt werden, um Fehlergrenzen für die UV-Anregungsstrahlungsleistung zu ermitteln. Darüber hinaus kann ein erwartetes Messsignal für die Kontrollmesseinrichtung 91 ermittelt werden. Nach diesem Kalibrierschritt, ist die Strahlungsleistung WA der UV-Anregungsstrahlung, welche durch den Ausleuchtbereich 53 der Prüfebene trifft oder auf diese auftrifft, bekannt.

In einem weiteren Kalibrierschritt, dargestellt in Fig. 2b, wird ein Lambert-Strahler herangezogen, d.h. ein Strahler, der Licht mit einer Lambert-Strahler-Strahlcharakteristik abstrahlt. Dies bedeutet, dass von jedem Punkt einer flächigen Abstrahlfläche 403 eine Intensität des abgestrahlten Lichts 405 gegeben ist durch $I = I_0 * \cos\alpha$, wobei $\alpha$ den Winkel der Abstrahlrichtung 407 gemessen gegen eine durch den entsprechenden Punkt 411 verlaufende Oberflächennormale 409 der Abstrahlfläche 403 angibt. Der Lambert-Strahler 401 wird so gewählt, dass dieser Licht bei einer Spektrallinie im vorgegebenen Wellenlängenbereich, beispielsweise im roten Wellenlängenbereich mit vorbekannter Strahlungsleistung WB erzeugt. Diese Wellenlänge wird als Kalibrationswellenlänge bezeichnet. Beispielsweise kann das Licht eines Helium-Neon-Lasers oder einer Laserdiode auf eine diffuse Streuscheibe geführt werden und ein Abstrahlbereich durch eine aufgebrachte Blende entsprechender Größe festgelegt sein. Die Strahlungsleistung WB des Lambert-Strahlers wird als vorbekannt vorausgesetzt, kann jedoch selbstverständlich mit einem entsprechenden Strahlungsmessgerät in absoluten physikalischen Größen gemessen werden.

Für einen zweiten Kalibrierschritt der Photolumineszenzmessvorrichtung 1 wird der Lambert-Strahler so relativ zu dem Gehäuse 11 angeordnet, dass die Abstrahlfläche 403 des Lambert-Strahler 401 mit dem Ausleuchtbereich 53 der Prüfebene 19 zusammenfällt und zusätzlich die Probenöffnung 17 vollständig gegen Umgebungslicht abgedichtet ist. Mit der Messeinrichtung 131 wird nun, ohne dass die Beleuchtungseinrichtung 41 im Betrieb ist, die Strahlungsleistung des Lambert-Strahlers 401 ermittelt. Der ermittelte Messwert wird als Strahlungsleistungskalibrationsmesswert MK bezeichnet. Anhand der Strahlungsleistung WB des Lambert-Strahlers, die beispielsweise 60 % der ermittelten Strahlungsleistung der UV-Anregungsstrahlung 51 entspricht, und der gemessenen UV-Anregungsstrahlungsleistung WA kann nun ein Kalibrierwert ermittelt werden. Hierfür wird zunächst eine äquivalente Anregungsstrahlungsleistung WÄ ermittelt, die der Strahlungsleistung entsprechen würde, die aufgrund einer Stokes-Verschiebung der UV-Anregungsphotonen in Lumineszenzphotonen der Kalibrationswellenlänge ergeben würde. Hierfür gilt:

$$W\ddot{A} = WA * (1 - (\lambda_{Lumineszenz} - \lambda_{UV}) / \lambda_{Lumineszenz}).$$

Der Kalibrationsfaktor, Kalibrierwert oder Kalibrationswert K ergibt sich dann aus dem Verhältnis der bekannten Strahlungsleistung WB des Lambert-Strahlers geteilt durch das Produkt der äquivalenten Strahlungsleistung WÄ der Anregungsstrahlung und dem Strahlungsleistungskalibrationsmesswert MK:

$$K = WB / (W\ddot{A} * MK).$$

Dieser Kalibrationswert K wird dann in dem Speicher 201 abgelegt (siehe Figur 1).

Bei einer nachfolgenden Messung, so wie im Zusammenhang mit der Beschreibung von Figur 1 erläutert wurde, wird nun der ermittelte Strahlungsleistungsmesswert MM mit dem Kalibrationswert K multipliziert, und das Ergebnis liefert dann eine Photolumineszenzeffizienz in absoluten Größeneinheiten:

$$FE = MM * K.$$

Entscheidend ist, dass zur Kalibration der Photolumineszenzmessvorrichtung und beim Ausführen des Kalibrationsverfahrens kein Photolumineszenzstandard notwendig ist, um die Kalibration auszuführen. Es sind lediglich radiometrische Messeinrichtung notwendig, um die Kalibration auszuführen bzw. das Schaffen eines Lambert-Strahlers mit vorbekannter Strahlungsleistung. Die Erfindung bietet somit der Vorteil, dass ohne die Notwendigkeit der Verwendung einer ansonsten notwendigen Ulbrichtkugel zur Vermessung der absoluten Lumineszenz einer flächigen Probe eine recht einfache und ohne die Verwendung eines Lumineszenzstrahlers kalibrierte Photolumineszenzmesseinrichtung verwendet werden kann, um absolute Photolumineszenzeffizienzen zu ermitteln.

Bezugszeichenliste

| | |
|---|---|
| 1 | Photolumineszenzmessvorrichtung |
| 3 | ebene Probe |
| 5 | Substrat |
| 7 | Oberseite |
| 9 | Aufdruck |
| 11 | Gehäuse |
| 13 | Messkammer |
| 15 | Innenwände |
| 17 | Probenöffnung |
| 19 | Prüfebene |
| 21 | Unterseite Gehäuse |
| 31 | Bohrung |
| 33 | Zentralachse |
| 35 | Oberflächennormale (der Prüfebene) |
| 41 | UV-Beleuchtungseinrichtung |
| 43 | Platine |
| 45, 47 | LED |
| 49 | Abbildungslinse |
| 51 | UV-Anregungsstrahlung |
| 53 | Ausleuchtbereich |
| 55 | Bandpassfilter |
| 57 | eine Seite (Bandpassfilter) |
| 59 | Flansch |
| 61 | gegenüberliegende Seite (Bandpassfilter) |
| 63 | Halterungsring |
| 65 | Füllmasse |
| 67 | UV-Lichtquelle |

| 71 | Konstantstromquelle |
|---|---|
| 73 | Temperaturmessfühler |
| 73' | Temperaturmesseinrichtung |
| 75 | Heiz-/Kühlelement |
| 75' | Regeleinheit |
| 81 | Quarzglasplatte |
| 83 | Vorderseite |
| 85 | Rückseite |
| 91 | Kontrollmesseinrichtung |
| 93 | Kontrolleinrichtung |
| 95 | Kontrollsignal |
| 101 | weitere Bohrung |
| 121 | Photolumineszenzstrahlung |
| 131 | Messeinrichtung |
| 133 | Photodetektor |
| 135 | Photodiode |
| 137 | weitere Füllmasse |
| 141 | Langpassfilter |
| 143 | eine Seite (Langpassfilter) |
| 145 | gegenüberliegende Seite Bandpassfilter |
| 147 | weiterer Haltering |
| 171 | noch weitere Bohrung |
| 173 | Mittelachse |
| 175 | Flansch |
| 181 | Temperaturmessfühler |
| 181' | weitere Temperaturmesseinrichtung |
| 183 | Kühl-/Heizelement |
| 183' | weitere Regeleinheit |
| 191 | Verstärker |
| 193 | Messsignalerzeugungseinrichtung (AD-Wandler) |
| 201 | Speicher |
| 211 | Auswerteeinrichtung |
| 221 | Ausgabeeinrichtung |
| 231 | Steuereinrichtung |
| 241 | Steuereinrichtung |
| 250 | zusätzliche Bohrung |
| 251 | Lichtleitfaser |
| 261 | optische Auswerteeinrichtung |
| 270 | Füllmasse |
| 301 | Strahlungsmesseinrichtung |
| 401 | Lambert-Strahler |
| 403 | Abstrahlfläche |
| 405 | abgestrahltes Licht |
| 407 | Abstrahlrichtung |
| 409 | Oberflächennormale |
| 411 | Punkt |
| 501 | Kennlinie |
| 503 | gestrichelte Gerade |

**Patentansprüche**

1. Verfahren zum Kalibrieren einer Photolumineszenzmessvorrichtung (1), welche eine UV-Beleuchtungseinrichtung (41),

sowie eine im vorgegebenen Wellenlängenbereich empfindliche Messeinrichtung (131), die Photolumineszenzstrahlung spektral integriert vermisst und eine von der Wellenlänge der Photonen unabhängige Quantenausbeute aufweist,

sowie eine Ausgabeeinrichtung (221) zum Ausgeben eines Photolumineszenzmessergebnisses aufweist, wobei die UV-Beleuchtungseinrichtung (41) und die Messeinrichtung (131) an oder in einem Gehäuse (11) mit einer Messkammer (13) angeordnet sind, wobei das Gehäuse (11) die Messkammer (13) gegen Strahlung aus der Umgebung abschirmt, jedoch eine Probenöffnung (17) aufweist, die eine Prüfebene (19) definiert, und wobei die UV-Beleuchtungseinrichtung (131) so angeordnet ist, dass UV-Anregungsstrahlung (51) der UV-Beleuchtungseinrichtung (131) durch die Messkammer (13) hindurch einen Ausleuchtbereich (53) der Probenöffnung (19) beleuchtet und die Messeinrichtung (131) so in der Messkammer (13) angeordnet ist, dass der gesamte Ausleuchtbereich (53) der Prüfebene (19) in einem Erfassungsbereich der Messeinrichtung (131) liegt, so dass die Messeinrichtung (131) von jedem beliebigen Punkt des Ausleuchtbereichs (53) zumindest einen Teil von in die Messkammer (13) mit einer Lambert-Strahlung-Strahlungscharakteristik eingestrahlter diffuser Lichtstrahlung im vorgegebenen Wellenlängenbereich erfasst,

wobei das Verfahren die Schritte umfasst:

Betreiben der UV-Beleuchtungseinrichtung (41) mit vorgegebenen Betriebsparametern zum Erzeugen von monochromatischer UV-Anregungsstrahlung (51) mit einer Anregungswellenlänge $\lambda 1$, welche den Ausleuchtbereich (53) der Prüfebene (19) ausleuchtet;

Anordnen der Probenöffnung (17) auf einer Einlassöffnung eines Strahlungsmessgerätes (301) und Messen einer Anregungsstrahlungsleistung WA der durch den Ausleuchtbereich (53) der Prüfebene (19) tretenden UV-Anregungsstrahlung (51),

Anordnen der Probenöffnung (17) vor einem monochromatischen Lambert-Strahler (401), der monochromatisches Licht (405) mit bekannter Strahlungsleistung WB bei einer Kalibrationswellenlänge $\lambda 2$ im vorgegebenenen Wellenlängenbereich mit einer Lambert-Strahler-Strahlungscharakteristik abstrahlt, wobei eine Abstrahlfläche (403) des Lambert-Strahlers (401) einer Ausdehnung der Ausleuchtfläche (53) entspricht, und das Anordnen der Photolumineszenzmessvorrichtung (1) relativ zu dem Lambert-Strahler (401) so erfolgt, dass die Ausleuchtfläche (53) und die Abstrahlfläche (403) des Lambert-Strahlers (401) in der Prüfebene (19) zusammenfallen und kein Umgebungslicht in die Messkammer (13) eindringt;

Messen der Strahlungsleistung des Lambert-Strahlers (401) mit der Messeinrichtung (131) und Erfassen eines Strahlungsleistungskalibrationsmesswerts MK, während die UV-Beleuchtungseinrichtung (41) nicht in Betrieb ist; und

Errechnen einer äquivalenten Anregungsstrahlungsleistung WÄ anhand der gemessenen Anregungsstrahlungsleistung WA, indem eine mit einer Stokesverschiebung der UV-Anregungswellenlänge $\lambda 1$ zu der Kalibrationswellenlänge $\lambda 2$ einhergehende Leistungsänderung berücksichtigt wird, wobei sich die äquivalente Anregungsstrahlungsleistung WÄ gemäß folgender Formel ergibt: WÄ = WA * (1-($\lambda 1$-$\lambda 2$)/$\lambda 1$), und

Ermitteln eines Kalibrierwerts K aus einem Verhältnis der bekannten Strahlungsleistung WB des Lambert-Strahlers (301) und einem Produkt der errechneten äquivalenten UV-Anregungsstrahlungsleistung WÄ und dem Strahlungsleistungskalibrationsmesswert MK gemäß der Formel K = WB / (WA * MK), und Ablegen des Kalibrierwertes K, so dass nachfolgende Messwerte $MM_j$ der Messeinrichtung, die bei einer Beleuchtung des Ausleuchtbereichs (53) der Prüfebene (19) mittels der UV-Beleuchtungseinrichtung (141) bei den vorgegebenen Betriebsparametern für vor der Probenöffnung (17) angeordnete flache Proben (3) gemessen sind, in eine Photolumineszenzeffizienz $FE_j$ der Probe (3) gemäß der Formel $FE_j = MM_j * K$ umrechenbar sind.

2. Verfahren zum Bestimmen einer absoluten Photolumineszenzeffizienz FE einer ebenen Probe (3) umfassend die Schritte:

Anordnen der Probe (3) vor einer Probenöffnung (17) eines Gehäuses (11), die einen Zugang zu einer im Inneren des Gehäuses (11) befindlichen Messkammer (13) darstellt, wobei die Probenöffnung (17) eine Prüfebene (19) definiert und wobei die Probe (3) vor der Probenöffnung (17) so angeordnet wird, dass die Probe (3) an die Prüfebene (19) angrenzt oder mit dieser zusammenfällt;

Erzeugen von monochromatischer UV-Anregungsstrahlung (51) mit einer Beleuchtungseinrichtung (41) bei vorgegebenen Betriebsparametern, um mit einer vorermittelten UV-Anregungsstrahlungsleistung durch die Messkammer (13) hindurch einen Ausleuchtbereich (53) der Prüfebene (19) mit der bereitgestellten monochromatischen UV-Anregungsstrahlung (51) auszuleuchten;

zeitgleiches Messen einer im vorgegebenen Wellenlängenbereich spektral integrierten Lumineszenzintensität der an der Probe (3) erzeugten und in die Messkammer (13) abgestrahlten Photolumineszenzstrahlung (121) mit einer Messeinrichtung (131), die Photolumineszenzstrahlung spektral integriert vermisst und ein von der Wellenlänge der Photonen unabhängige Quantenausbeute aufweist und deren Erfassungsbereich so ausgebildet ist, dass für jeden Punkt des Ausleuchtbereichs (53) der Prüfebene (19) gilt, dass von diffus in die Messkammer (13) mit einer Lambert-Strahler-Strahlungscharakteristik von diesem Punkt abgestrahlter Lichtstrahlung zumindest ein Teil der Lichtintensität erfasst wird;

Erfassen eines Kalibrierwertes K mit einem Verfahren gemäß Anspruch 1 oder Auslesen des Kalibrierwertes K, der nach einem Verfahren gemäß Anspruch 1 ermittelt wurde, aus einer Speichereinrichtung (201) und Errechnen einer Photolumineszenzeffizienz FE anhand der gemessenen Lumineszenzintensität (MM) und dem Kalibrierwert K gemäß der Formel FE = MM * K; und Ausgeben und/oder Bereitstellen der errechneten Photolumineszenzeffizienz FE.

3. Verfahren nach Anspruch 2, **dadurch gekennzeichnet, dass** mittels einer weiteren photoempfindlichen Kontrollmesseinrichtung (91) eine Intensität eines Anteils der erzeugten UV-Anregungsstrahlung (51) der UV-Beleuchtungseinrichtung (41) ermittelt wird und mit einer erwarteten Intensität verglichen wird und bei einer erfassten Abweichung oberhalb einer Toleranzschwelle zwischen der ermittelten und der erwarteten Intensität ein Kontrollsignal erzeugt wird.

4. Verfahren nach Anspruch 2 oder 3, **dadurch gekennzeichnet, dass** das Kontrollsignal ausgewertet wird und eine Beeinflussung der UV-Beleuchtungseinrichtung (41) vorgenommen wird, um die in der weiteren Messeinrichtung (91) gemessene Intensität der erwarteten Intensität anzugleichen.

5. Verfahren nach einem der Ansprüche 2 bis 4, **dadurch gekennzeichnet, dass** die UV-Anregungsstrahlung (51) mit einer UV-Beleuchtungseinrichtung (41) erzeugt wird, die als die UV-Lichtquelle (67) mindestens eine Leuchtdiode (45, 47) umfasst.

6. Verfahren nach einem der Ansprüche 2 bis 5, **dadurch gekennzeichnet, dass** in der UV-Beleuchtungseinrichtung (41) ein Filter (55) eingesetzt wird, um die in die Messkammer (13) eingestrahlte UV-Anregungsstrahlung auf eine Wellenlänge oder einen begrenzten Wellenlängenbereich einzugrenzen.

7. Verfahren nach einem der Ansprüche 2 bis 6, **dadurch gekennzeichnet, dass** in der Messeinrichtung (131) ein Langpassfilter (141) eingesetzt wird, der UV-Licht blockiert, sodass die zur Anregung verwendete von der UV-Beleuchtungseinrichtung (131) eingestrahlte UV-Anregungsstrahlung (51) nicht zu einem Photodetektor (133) der Messeinrichtung (131) gelangt.

8. Verfahren nach einem der Ansprüche 2 bis 7, **dadurch gekennzeichnet, dass** die Lumineszenzintensität mit der Messeinrichtung (131) gemessen wird, die im vorgegebenen Wellenlängenbereich eine Strahlungsintensität integrierend über diesen vorgegebenen Wellenlängenbereich erfasst.

9. Verfahren nach einem der Ansprüche 2 bis 8, **dadurch gekennzeichnet, dass** als die Messeinrichtung (131) eine solche verwendet wird, deren Quanteneffizienz der Messeinrichtung (133) im vorgegebenen Wellenlängenbereich im Rahmen einer vorfestgelegten Toleranz wellenlängenunabhängig ist.

10. Verfahren nach einem der Ansprüche 7 bis 9, **dadurch gekennzeichnet, dass** als Photodetektor (133) eine Photodiode verwendet wird.

11. Verfahren nach einem der Ansprüche 7 bis 10, **dadurch gekennzeichnet, dass** die Messeinrichtung (131) für Rohmesssignale des Photodetektors (133), deren Wert um mindestens vier Größenordnungen verschieden sein kann, einen Messwert erzeugt, der linear zu dem Rohmesssignal ist.

12. Verfahren nach einem der Ansprüche 5 bis 11, **dadurch gekennzeichnet, dass** die UV-Lichtquelle (67) und/oder der Photodetektor (133) verwendet werden, die in dem Gehäuse (11) mittels einer Füllmasse (65,137) vergossen sind.

13. Verfahren nach einem der Ansprüche 2 bis 12, **dadurch gekennzeichnet, dass** über eine durch das Gehäuse (11) in die Messkammer (13) geführte und dort angeordnete Lichtleitfaser (251) ein Teil des von aus der Prüfebene (19) in die Messkammer (13) abgestrahlten Lichts erfasst wird, und dieses erfasste Licht einer optischen Auswerteeinrichtung (261), insbesondere einem Spektrometer, zugeführt wird.

14. Verfahren nach einem der Ansprüche 2 bis 13, **dadurch gekennzeichnet, dass** ein Teil der UV-Anregungsstrahlung (51) der UV-Beleuchtungseinrichtung (41) auf eine Kontrollmesseinrichtung (91) geführt wird, welche eine UV-Lichtintensität misst, und die Kontrollmesseinrichtung (91) mit einer Kontrolleinrichtung (93) gekoppelt ist, die eine gemessene UV-Lichtintensität mit einer vorgegebenen UV-Lichtintensität vergleicht und ein Kontrollsignal ausgibt, wenn eine Abweichung zwischen der gemessenen UV-Lichtintensität und der vorgegebenen UV-Lichtintensität oberhalb einer Toleranzschwelle erfasst ist.

15. Verfahren nach einem der Ansprüche 2 bis 14, **dadurch gekennzeichnet, dass** der vorgegebene Wellenlängenbereich Wellenlängen zwischen 190 nm und 1100nm, bevorzugter Wellenlängen zwischen 350 nm und 1100 nm und am bevorzugtesten Wellenlängen zwischen 400 nm und 1100 nm, umfasst.

**Claims**

1. Method for calibration of a photoluminescence measuring apparatus (1), which comprises a UV illumination device (41) and a measuring device (131) which is sensitive in the predefined wavelength range, which integrally measures the photoluminescence radiation and quantum efficiency independently of the wavelength of the photons, as well as an output device (221) for outputting a photoluminescence measurement result, wherein the UV illumination device (41) and the measuring device (131) are arranged at or in a housing (11) with a measuring chamber (13), wherein the housing (11) screens the measuring chamber (13) against radiation from the surrounding environment, but comprises a sample opening (17), which defines a test plane (19), and wherein the UV illumination device (41) is arranged in such a way that UV excitation radiation (51) from the UV illumination device (41) illuminates through the measuring chamber (13) an illumination region (53) of the sample opening (17) and the measuring device (131) is arranged in the measuring chamber (13) in such a way that the entire illumination region (53) of the test plane (19) lies in a detection range of the measuring device (131), such that the measuring device (131) detects from any desired point of the illumination region (53) at least a part of diffuse light radiation emitted into the measuring chamber (13) with a Lambertian emitter radiation characteristic in the predefined wavelength range, wherein the method comprises the steps:

operation of the UV illumination device (41) with predefined operating parameters for producing monochromatic UV excitation radiation (51) with an excitation wavelength λ1, which illuminates the illumination region (53) of the test plane (19);
arrangement of the sample opening (17) on an inlet opening of a radiation measuring device (301) and measurement of an excitation radiation power WB of the UV excitation radiation (51) passing through the illumination region (53) of the test plane (19);
arrangement of the sample opening (17) in front of a monochromatic Lambert radiator (401), which emits monochromatic light (405) with a known radiation power WB at a calibration wavelength λ2 in the predefined wavelength range with a Lambertian emitter radiation characteristic, wherein an emission surface (403) of the Lambert radiator (401) corresponds to an extension of the illumination region (53), and the arrangement of the photoluminescence device (1) relative to the Lambert radiator (401) is such that an illumination region (53) and the emission surface (403) of the Lambert radiator (401) coincide in the test plane (19) and no ambient light penetrates into the measuring chamber (13);
measuring of the radiation power of the Lambert radiator (401) with the measuring device (131) and detection of a radiation power calibration measurement value MK while the UV illumination device (41) is not in operation; and
calculation of an equivalent excitation radiation power WÄ on the basis of the measured excitation radiation power WA, in that account is taken of a power change inherent with a Stokes displacement of the UV excitation wavelength λ1 to the calibration wavelength λ2, wherein the equivalent excitation radiation power WÄ is derived according to the following formula:

$$WÄ = WA * (1 - (λ1 - λ2) / λ1),$$

and
determination of a calibration value K from a ratio of the known radiation power WB of the Lambert radiator (301) and a product of the equivalent UV excitation radiation power WÄ and the radiation power calibration measurement value MK, according to the formula K = WB / (WA * MK) and the storing of the calibration value K, such that subsequent measured values $MM_j$ of the measuring device, which are measured during an illumination of the illumination region (53) of the test plane (19) by means of the UV lighting device (141) with the predefined operating parameters for flat samples (3) arranged in front of the sample opening (17), can be converted by calculation into a photoluminescence efficiency $FE_j$ of the sample (3), according to the formula $FE_j = MM_j * K$.

2. Method for determining an absolute photoluminescence efficiency of a flat sample (3), comprising the steps:

arrangement of the sample (3) in front of a sample opening (17) of a housing (11), which represents an access to a measuring chamber (13) located in the interior of the housing (11), wherein the sample opening (17) defines a test plane (19) and wherein the sample (3) is arranged in front of the sample opening (17) in such a way that the sample (3) abuts the test plane (19) or coincides with it;

production of monochromatic UV excitation radiation (51) with an illumination device (41) under predefined operational parameters, in order, with a predefined UV excitation radiation output, through the measuring chamber (13) to illuminate an illumination region (53) of the test plane (19) with the monochromatic UV excitation radiation (51) provided;

simultaneous measurement of a luminescence intensity, spectrally integrated in the predetermined wavelength range, of the photoluminescence radiation (121) produced at the sample (3) and radiated into the measuring chamber (13) with a measuring device (131), measureing the spectrally integrated photoluminescence radiation, and exhibiting a quantum efficiency which is independent of the wavelength of the photons, and of which the detection range is configured in such a way that, for each point of the illumination range (53) of the test plane (19), it holds true that, of the light radiation emitted from this point and irradiated diffusely into the measuring chamber (13) with a Lambertian emitter radiation characteristic, at least a part of the light intensity is detected;

acquisition of a calibration value K, using a method according to claim 1, or reading out of the calibration value K which was determined in accordance with a method according to claim 1, from a storage device (201) and calculation of a photoluminescence efficiency FE on the basis of the measured luminescence intensity (MM) and the calibration value K in accordance with the formula FE = MM * K, and output and/or provision of the calculated photoluminescence efficiency FE.

3. Method according to claim 2, **characterised in that**, by means of a further photosensitive control measuring device (91), an intensity of a portion of the UV excitation radiation (51) from the UV lighting device (41) is determined and compared with an anticipated intensity, and, in the event of a deviation being detected which is above a tolerance threshold between the determined and anticipated intensity, a control signal is produced.

4. Method according to claim 2 or 3, **characterised in that** the control signal is evaluated and an influencing of the UV lighting device (41) is carried out in order to equal the intensity measured in the further measuring device (91) to the anticipated intensity.

5. Method according to any one of claims 2 to 4, **characterised in that** the UV excitation radiation (51) is produced with a UV lighting device (41), which comprises as the UV light source (67) at least one light-emitting diode (45, 47).

6. Method according to any one of claims 2 to 5, **characterised in that** a filter (55) is inserted into the UV lighting device (41) in order for the UV excitation radiation emitted into the measuring chamber (13) to be limited to a wavelength or a limited wavelength range.

7. Method according to any one of claims 2 to 6, **characterised in that** a long-pass filter (141) is inserted into the measuring device (131) which blocks UV light, such that the UV excitation radiation (51) emitted by the UV lighting device (131) and used for the excitation does not pass to a photodetector (133) of the measuring device (131).

8. Method according to any one of claims 2 to 7, **characterised in that** the luminescence intensity is measured with the measuring device (131), which in the predefined wavelength range detects a radiation intensity, and integrating over this predefined wavelength range.

9. Method according to any one of claims 2 to 8, **characterised in that**, as the measuring device (131), such a device is used of which the quantum efficiency of the measuring device (131) in the predefined wavelength range is wavelength-independent within the framework of a predefined tolerance.

10. Method according to any one of claims 7 to 9, **characterised in that**, as the photodetector (133), a photodiode is used.

11. Method according to any one of claims 7 to 10, **characterised in that** the measuring device (131) produces a measured value for raw measuring signals from the photodetector (133), the value of which can differ by at least four orders of magnitude, which is linear to the raw measuring signal.

12. Method according to any one of claims 5 to 11, **characterised in that** the UV light source (67) and/or the photodetector (133) are used which are cast in the housing (11) by means of a filler compound (65, 137).

13. Method according to any one of claims 2 to 12, **characterised in that**, by means of a light-conducting fibre (251) which is guided through the housing (11) into the measuring chamber (13) and is arranged there, a part of the light emitted from the test plane (19) into the measuring chamber (13) is detected, and this detected light is conducted to an optical evaluation device (261), in particular to a spectrometer.

14. Method according to any one of claims 2 to 13, **characterised in that** a part of the UV excitation radiation (51) from the UV lighting device (41) is conducted to a control measuring device (91), which measures a UV light intensity, and the control measuring device (91) is coupled to a control device (93), which compares a measured UV light intensity with a predefined UV light intensity and issues a control signal if a deviation is detected between the measured UV light intensity and the predefined UV light intensity above a tolerance threshold.

15. Method according to any one of claims 2 to 14, **characterised in that** the predefined wavelength range comprises wavelengths between 190 nm and 1100 nm, as preferred wavelengths between 350 nm and 1100 nm, and as most preferred wavelengths between 400 nm and 1100 nm.

**Revendications**

1. Procédé servant à étalonner un dispositif de mesure de photoluminescence (1), qui présente un système d'éclairage UV (41), ainsi qu'un système de mesure (131) sensible dans la plage de longueurs d'onde spécifiée, lequel mesure de manière intégrée spectralement le rayonnement de photoluminescence, et un rendement quantique indépendant de la longueur d'onde des photons, et qui présente également un système de sortie (221) servant à sortir un résultat de mesure de photoluminescence, dans lequel le système d'éclairage UV (41) et le système de mesure (131) sont disposés au niveau ou dans un boîtier (11) avec une chambre de mesure (13), dans lequel le boîtier (11) protège la chambre de mesure (13) contre le rayonnement provenant de l'extérieur, présente toutefois une ouverture pour échantillon (17), qui définit un plan d'essai (19), et dans lequel le système d'éclairage UV (131) est disposé de telle sorte que le rayonnement d'excitation UV (51) du système d'éclairage UV (131) éclaire, à travers la chambre de mesure (13), une zone d'illumination (53) de l'ouverture pour échantillon (19) et le système de mesure (131) est disposé de telle sorte dans la chambre de mesure (13) que l'ensemble de la zone d'illumination (53) du plan d'essai (19) se trouve dans une zone de détection du système de mesure (131) de sorte que le système de mesure (131) détecte, par chaque point quelconque de la zone d'illumination (53), au moins une partie du rayonnement lumineux diffus, incident dans la chambre de mesure (13) avec une caractéristique de rayonnement de rayonnement de Lambert, dans la plage de longueurs d'onde spécifiée,

dans lequel le procédé comprend les étapes consistant à :

faire fonctionner le système d'éclairage UV (41) avec des paramètres spécifiés afin de générer un rayonnement d'excitation UV (51) monochromatique présentant une longueur d'onde d'excitation λ1, qui illumine la zone d'illumination (53) du plan d'essai (19),

disposer l'ouverture pour échantillon (17) sur une ouverture d'entrée d'un appareil de mesure de rayonnement (301) et mesurer une puissance de rayonnement d'excitation WA du rayonnement d'excitation UV (51) traversant la zone d'illumination (53) du plan d'essai (19) ;

disposer l'ouverture pour échantillon (17) devant un émetteur de Lambert (401) monochromatique, qui émet de la lumière (405) monochromatique présentant une puissance de rayonnement WB connue pour une longueur d'onde d'étalonnage λ2 dans la plage de longueurs d'onde spécifiée, avec une caractéristique de rayonnement d'émetteur de Lambert, dans lequel une surface d'émission (403) de l'émetteur de Lambert (401) correspond à une extension de la surface d'illumination (53), et la disposition du dispositif de mesure de photoluminescence (1) par rapport à l'émetteur de Lambert (401) est effectuée de telle sorte que la surface d'illumination (53) et la surface d'émission (403) de l'émetteur de Lambert (401) coïncident dans le plan d'essai (19) et qu'aucune lumière ambiante ne pénètre la chambre de mesure (13) ;

mesurer la puissance de rayonnement de l'émetteur de Lambert (401) avec le système de mesure (131) et détecter une valeur de mesure d'étalonnage de puissance de rayonnement MK, alors que le système d'éclairage UV (41) est hors service ; et

calculer une puissance de rayonnement d'excitation équivalente WÄ à l'aide de la puissance de rayonnement d'excitation WA mesurée, en ce qu'une variation de puissance allant de pair avec un décalage Stokes de la longueur d'onde d'excitation UV λ1 par rapport à la longueur d'onde d'étalonnage λ2 est prise en compte, dans lequel résulte la puissance de rayonnement d'excitation équivalente WÄ selon la formule qui suit : WÄ = WA *

**EP 2 988 950 B1**

$(1-(\lambda 1 - \lambda 2)/ \lambda 1)$, et

déterminer une valeur d'étalonnage K à partir d'un rapport entre la puissance de rayonnement WB connue de l'émetteur de Lambert (301) et d'un produit de la puissance de rayonnement d'excitation UV équivalente WÄ calculée et de la valeur de mesure d'étalonnage de puissance de rayonnement MK selon la formule K = WB / (WA * MK), et archiver la valeur d'étalonnage K de sorte que des valeurs de mesure $MM_j$ qui suivent du système de mesure, qui sont mesurées lors d'un éclairage de la zone d'illumination (53) du plan d'essai (19) au moyen du système d'éclairage UV (141) en présence de paramètres de fonctionnement spécifiés pour des échantillons (3) plats disposés devant l'ouverture pour échantillon (17), puissent être converties en une efficacité de la photoluminescence $FE_j$ de l'échantillon (3) selon la formule $FE_j = MM_j * K$.

2. Procédé servant à définir une efficacité de photoluminescence FE absolue d'un échantillon (3) plan, comprenant les étapes consistant à :

disposer l'échantillon (3) devant une ouverture pour échantillon (17) d'un boîtier (11), laquelle constitue un accès à une chambre de mesure (13) se trouvant à l'intérieur du boîtier (11), dans lequel l'ouverture pour échantillon (17) définit un plan d'essai (19) et dans lequel l'échantillon (3) est disposé devant l'ouverture pour échantillon (17) de telle sorte que l'échantillon (3) est adjacent au plan d'essai (19) ou coïncide avec ce dernier ; générer un rayonnement d'excitation UV (51) monochromatique avec un système d'éclairage (41) en présence de paramètres de fonctionnement spécifiés afin d'illuminer, avec une puissance de rayonnement d'excitation UV préalablement déterminée, au travers de la chambre de mesure (13), une zone d'illumination (53) du plan d'essai (19) avec le rayonnement d'excitation UV (51) monochromatique fourni ; mesurer dans le même temps une intensité de luminescence, intégrée spectralement dans la plage de longueurs d'onde spécifiée, du rayonnement de photoluminescence (121) généré au niveau de l'échantillon (3) et émis dans la chambre de mesure (13) avec un système de mesure (131), qui mesure de manière intégrée spectralement le rayonnement de photoluminescence et qui présente un rendement quantique indépendant de la longueur d'onde des photons et dont la zone de détection est réalisée de telle sorte que pour chaque point de la zone d'illumination (53) du plan d'essai (19) s'applique le fait qu'au moins une partie de l'intensité lumineuse d'un rayonnement lumineux émis de manière diffuse dans la chambre de mesure (13) avec une caractéristique de rayonnement d'émetteur de Lambert par ledit point est détectée ; détecter une valeur d'étalonnage K avec un procédé selon la revendication 1 ou lire la valeur d'étalonnage K, qui a été déterminée selon un procédé selon la revendication 1, depuis un système de mémoire (201) et calculer une efficacité de photoluminescence FE à l'aide de l'intensité de luminescence (MM) mesurée et de la valeur d'étalonnage K selon la formule FE = MM * K ; et sortir et/ou fournir l'efficacité de photoluminescence FE calculée.

3. Procédé selon la revendication 2, **caractérisé en ce qu'**une intensité d'une proportion du rayonnement d'excitation UV (51) généré du système d'éclairage UV (41) est déterminée au moyen d'un autre système de mesure de contrôle (91) photosensible et est comparée à une intensité attendue, et **en ce qu'**un signal de contrôle est généré en présence d'un écart détecté supérieur à un seuil de tolérance entre l'intensité déterminée et l'intensité attendue.

4. Procédé selon la revendication 2 ou 3, **caractérisé en ce que** le signal de contrôle est évalué, et **en ce qu'**une influence du système d'éclairage UV (41) est entreprise afin d'ajuster l'intensité mesurée dans l'autre système de mesure (91) à l'intensité attendue.

5. Procédé selon l'une quelconque des revendications 2 à 4, **caractérisé en ce que** le rayonnement d'excitation UV (51) est généré avec un système d'éclairage UV (41), qui comprend en tant que la source de lumière UV (67) au moins une diode électroluminescente (45, 47).

6. Procédé selon l'une quelconque des revendications 2 à 5, **caractérisé en ce qu'**un filtre (55) est employé dans le système d'éclairage UV (41) afin de restreindre le rayonnement d'excitation UV incident dans la chambre de mesure (13) à une longueur d'onde ou à une plage de longueurs d'onde limitée.

7. Procédé selon l'une quelconque des revendications 2 à 6, **caractérisé en ce qu'**est employé, dans le système de mesure (131), un filtre passe-haut (141), qui bloque la lumière UV de sorte que le rayonnement d'excitation UV (51) incident émis par le système d'éclairage UV (131) utilisé pour l'excitation ne parvienne pas à un photodétecteur (133) du système de mesure (131).

8. Procédé selon l'une quelconque des revendications 2 à 7, **caractérisé en ce que** l'intensité de luminescence est mesurée avec le système de mesure (131), qui détecte, dans la plage de longueurs d'onde spécifiée, une intensité de rayonnement par intégration sur ladite plage de longueurs d'onde spécifiée.

9.  Procédé selon l'une quelconque des revendications 2 à 8, **caractérisé en ce qu'**est utilisé en tant que système de mesure (131) un système de mesure du type, dont le rendement quantique du système de mesure (133) dépend de la longueur d'onde dans la plage de longueurs d'onde spécifiée dans le cadre d'une tolérance préalablement fixée.

10. Procédé selon l'une quelconque des revendications 7 à 9, **caractérisé en ce qu'**une photodiode est utilisée en tant que photodétecteur (133).

11. Procédé selon l'une quelconque des revendications 7 à 10, **caractérisé en ce que** le système de mesure (131) génère une valeur de mesure qui est linéaire par rapport au signal de mesure brute pour des signaux de mesure brute du photodétecteur (133), dont la valeur peut être différente d'au moins quatre ordres de grandeur.

12. Procédé selon l'une quelconque des revendications 5 à 11, **caractérisé en ce que** la source de lumière UV (67) et/ou le photodétecteur (133) sont utilisés, lesquels sont scellés dans le boîtier (11) au moyen d'une masse de remplissage (65, 137).

13. Procédé selon l'une quelconque des revendications 2 à 12, **caractérisé en ce qu'**une partie de la lumière émise à partir du plan d'essai (19) dans la chambre de mesure (13) est détectée par l'intermédiaire d'une fibre optique (251) guidée à travers le boîtier (11) dans la chambre de mesure (13) et disposée à cet endroit, et **en ce que** ladite lumière détectée est amenée à un système d'évaluation (261) optique, en particulier à un spectromètre.

14. Procédé selon l'une quelconque des revendications 2 à 13, **caractérisé en ce qu'**une partie du rayonnement d'excitation UV (51) du système d'éclairage UV (41) est guidée sur un système de mesure de contrôle (91), qui mesure une intensité lumineuse UV, et **en ce que** le système de mesure de contrôle (91) est couplé à un système de contrôle (93), qui compare une intensité lumineuse UV mesurée à une intensité lumineuse UV spécifiée et qui émet un signal de contrôle quand un écart entre l'intensité lumineuse UV mesurée et l'intensité lumineuse UV spécifiée supérieure à un seuil de tolérance est détecté.

15. Procédé selon l'une quelconque des revendications 2 à 14, **caractérisé en ce que** la plage de longueurs d'onde spécifiée comprend des longueurs d'onde comprises entre 190 nm et 1 100 nm, de manière préférée des longueurs d'onde comprises entre 350 nm et 1 100 nm et idéalement des longueurs d'onde comprises entre 400 nm et 1 100 nm.

Fig.1

Fig.2a

Fig.2b

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006227319 A1
- US 2002195571 A1
- US 5918960 A